# EUROPÄISCHE PATENTSCHRIFT

(11) **EP 2 942 110 B1**
(45) Veröffentlichungstag und Bekanntmachung des Hinweises auf die Patenterteilung: **17.01.2018**
(21) Anmeldenummer: 15162199.2
(22) Anmeldetag: 01.04.2015
(51) Int. Cl.: B05D 1/18, B05D 1/40, C09J 5/00, B05C 1/08, B05D 1/28, B28B 11/04, B29C 43/24, B29C 43/34, B29C 43/46

(54) **BESCHICHTUNGSVERFAHREN MIT SEITLICHEM ZULAUF**
COATING METHOD WITH LATERAL SUPPLY
PROCEDE DE REVETEMENT AVEC AMENEE LATERALE

(30) Priorität: 14.04.2014 DE 102014207141
(43) Veröffentlichungstag der Anmeldung: 11.11.2015
(73) Patentinhaber: tesa SE, 22848 Norderstedt (DE)
(72) Erfinder: Grittner, Norbert, 22459 Hamburg (DE); Kuss, Karsten, 22455 Hamburg (DE); Lehder, Matthias, 21244 Buchholz i.d.N. (DE)

(56) Entgegenhaltungen:
- EP-A2- 0 272 104
- EP-A2- 1 216 759
- WO-A1-02/43879
- WO-A2-2011/087657
- DE-U1- 8 536 141
- DE-U1- 20 311 665
- NL-A- 7 217 098
- US-A- 3 389 045

## Beschreibung

Die Erfindung liegt auf dem Gebiet der Beschichtung von Massen auf Trägermaterialien. Insbesondere wird ein Verfahren mit Ausbildung einer rotierenden Masseflotte vorgeschlagen, das es ermöglicht, Massen mit einem sich während der Beschichtung zeitlich änderndem rheologischen Profil besonders gleichförmig aufzutragen.

Häufig besteht beim Aufbringen mehr oder weniger viskoser Massen auf ein Trägermaterial die Problematik, dass sich bestimmte, insbesondere rheologische Eigenschaften der Masse während der Verarbeitung und insbesondere während des Ausbringens ändern. Solche Änderungen können beispielsweise durch eine Temperaturänderung, durch einen Anstieg des Feststoffgehalts in Folge verdampfenden Lösemittels oder durch den Fortschritt einer chemischen Reaktion während des Auftrags der Masse eintreten. Fast immer sind diese Eigenschaftsänderungen ein ausschlaggebender Parameter für die Qualität der Beschichtung, insbesondere für die Gleichmäßigkeit des Flächengewichtes. Will man also ein über die gesamte Beschichtungsbreite gleichförmiges Flächengewicht erreichen, so muss der Zustand der Masse entweder über die gesamte Breite gleich sein oder Ungleichmäßigkeiten müssen während des Beschichtungsprozesses gezielt ausgeglichen werden können.

Im Stand der Technik bekannte Auftragsvorrichtungen, welche eine rotierende Masseflotte (gelegentlich auch Knet genannt) bedingen, sind bisher nicht hinreichend geeignet, dem Problem sich während des Auftrags ändernder Viskositätsparameter zu begegnen. Vielmehr wird bei diesen Technologien stillschweigend davon ausgegangen, dass die rheologischen Eigenschaften des zu beschichtenden Stoffes (Masse) während des Beschichtungsprozesses unveränderlich sind. In der Realität jedoch wird die Masse im Allgemeinen aus einem Rohr oder einem Extruder dem Beschichtungsaggregat an einer Stelle offen zugeführt oder z.B. durch Rohrverteiler, oszillierend geführte Fütterstreifen oder Schlitzdüsen grob vorverteilt. Schließlich wird die Masse in Mehrwalzen-Auftragswerken, Kalandern oder an Streichbalken bzw. Rakeln zu einer exakten Schicht ausgeformt und auf ein Trägermaterial übertragen, wobei an mindestens einer der verteilenden Rakel oder Walzen die Masse aufgestaut wird. Dabei bildet sich zwischen Walzen unterschiedlicher Geschwindigkeit oder zwischen Rakel und zu beschichtender Bahn oder zwischen Rakel und rotierender Walz eine rotierende Massewulst, die sogenannte Masseflotte bzw. alternativ bezeichnet der Knet, aus. Sowohl in der Vorverteilung als auch in der rotierenden Masseflotte halten sich die einzelnen Volumenelemente der Masse durch verschiedene Wegstrecken, Strömungsprofile und Rückströmungen unterschiedlich lange auf. Dabei lokal unterschiedlich stark auftretende Änderungen der Masseeigenschaften wie Temperatur, Reaktionszustand oder Lösemittelgehalt können an den Beschichtungsaggregaten nicht oder nur zum Teil ausgeglichen werden.

Breitschlitzdüsen zum Beispiel haben eine vergleichsweise breite Verweilzeitverteilung, was dazu führt, dass der Massestrom an den Düsenrändern deutlich älter als in der Mitte ist und durch chemische Reaktionen bedingte rheologische Veränderungen somit an den Rändern häufig weiter fortgeschritten sind als in der Mitte. Soll der Massestrom nun aus einer Breitschlitzdüse über ein Kalander-Auftragswerk beschichtet werden, kommt es durch die Überlagerung verschiedener Effekte im Kalander zu weiteren Unregelmäßigkeiten. Nur an den Stellen, an denen die aus der Düse austretende Massefahne dicker ist als benötigt, speist der Überschuss die rotierende Masseflotte. Umgekehrt wird an den Stellen, an denen die Massefahne zu dünn ist, die fehlende Masse aus der rotierenden Masseflotte ergänzt. In der Masseflotte findet also eine Umverteilung von Masseanteilen statt, die mit zusätzlicher Verweilzeit verbunden ist. Eine optimierte Vorverteilung der Masse mit der Düse verlängert sogar die Verweilzeit der Masse in der rotierenden Masseflotte, wobei sie durchaus die Topfzeit überschreiten kann. Dies ist der Grund, warum eine immer bessere Regelung der Düsenlippe (Automatikdüse) nicht zum Erfolg führt, sondern im Gegenteil die Situation verschlechtert. Eine mathematisch perfekte Vorverteilung der Masse, die dieses Problem umgehen würde, ist praktisch nicht möglich.

Insgesamt ist bei derartigen Auftragsverfahren das Alter der Masse quer zur Laufrichtung durch die Überlagerung der beiden Effekte nicht kalkulierbar. Die Stellen, an denen ältere Masse beschichtet wird, bilden im fertigen Produkt Dickstellen, sogenannte Kolbenringe aus, was die Produktqualität beeinträchtigt.

In der Patentliteratur sind einige Beispiele zur Verbesserung der Verarbeitung höher viskoser Polymermasseströme bekannt. So beschreibt GB 1,158,890 B5 einen 2-Walzenstuhl zur Herstellung von Folien bis 0,5 mm Dicke mit Massezufuhr an beiden Seiten als billigere Alternative zu Walzenstühlen mit drei bis vier Walzen. Eine erste Ausformung der Schicht erfolgt dabei zwischen den Endzonen der Walzen; anschließend erfolgen ein Transfer des Massestroms in eine abgetrennte Mittelzone der Walzen durch "Stoppkörper" und die Ausformung der Folie.

GB 1,190,245 B1 beschreibt einen 2-Walzenstuhl mit einseitiger seitlicher Massezufuhr zur Entfernung von Ethylenglykol aus einer hochviskosen Masse bei der Herstellung von PET durch Polykondensation. Dabei wird die ständig erneuerte Masseoberfläche auf den rotierenden heißen Walzen zur schnelleren Verdampfung des Ethylenglykols genutzt.

Aufgabe der Erfindung ist es, ein Verfahren zum Auftragen eines Massestroms auf ein Trägermaterial zur Verfügung zu stellen, das es ermöglicht, bei Ausbildung einer rotierenden Masseflotte eine gleichmäßige Beschichtung zu erreichen. Insbesondere soll das Flächengewicht des Masseauftrags über die gesamte zu beschichtende Fläche hinweg möglichst gleich sein.

Die Lösung der Aufgabe wird durch den Grundgedanken der Erfindung erreicht, dem zufolge die Massezufuhr nicht wie üblich offen an einer Stelle oder grob vorverteilt mehr oder weniger gleichmäßig auf der vollen Breite der zu beschichtenden Bahn durch Rohrverteiler, oszillierend geführte Fütterstreifen oder Schlitzdüsen, sondern von der Seite her erfolgt.

Ein erster und allgemeiner Gegenstand der Erfindung ist daher ein Verfahren zum Beschichten einer Masse mit einer komplexen Viskosität (Platte-Platte-Rheometer; 25 °C) von 0,1 Pas (100 rad) bis 10⁶ Pas (0,1 rad) auf ein bahnförmiges Trägermaterial mittels einer Beschichtungsvorrichtung, die mindestens ein Element A umfasst, das mit einem weiteren Element B einen Spalt bildet, vor dem die Masse aufgestaut wird, und das sich relativ zu dem Element B derart bewegt, dass sich eine rotierende Masseflotte ausbildet und die Masse in den Spalt befördert wird; wobei das Verfahren
das Einbringen der Masse über eine Zuführvorrichtung in den Einzugsbereich des Spaltes sowie das Aufbringen der Masse auf ein bahnförmiges Trägermaterial im Spalt oder nachdem die Masse den Spalt durchlaufen hat, umfasst und dadurch gekennzeichnet ist, dass
jeder Austrittspunkt der Zuführvorrichtung und jeder Punkt, an dem die zugeführte Masse in Kontakt mit der rotierenden Masseflotte gerät, direkt in der oder in einer Entfernung D von der orthogonal zur Längserstreckung des Spaltes angeordneten Ebene liegt, welche die Längserstreckung E des von der Masseflotte ausfüllbaren Einzugsbereichs des Spaltes begrenzt, und dass jeder Austrittspunkt der Zuführvorrichtung unterhalb der Oberfläche der Masseflotte liegt,
wobei D einen Maximalwert Dₘₐₓ aufweist, der 10 % der Längserstreckung des von der Masseflotte ausfüllbaren Einzugsbereichs des Spaltes beträgt.

Durch die erfindungsgemäße Verfahrensweise bildet sich eine im Wesentlichen kegelförmige Flotte aus. Sie speist sich von innen heraus mit frischer Masse. Der Weitertransport der Masse von der Masseflotte auf die zu beschichtende Bahn oder eine der folgenden Walzen erfolgt dabei vorteilhaft von der äußeren Oberfläche der rotierenden Masseflotte, sie wird sozusagen abgeschält. Daraus ergibt sich innerhalb der Masseflotte eine Massebewegung von innen nach außen und gleichzeitig axial von der Zulaufstelle weg zum entgegengesetzten Ende der Masseflotte. Diese Strömung innerhalb der Masseflotte hat im stabilen Betriebszustand - d.h. wenn der Massezulauf und der Masseabfluss durch den Spalt gleich und zeitlich konstant sind - eine über die Zeit in jedem Volumenelement stabile Richtung und Geschwindigkeit. Daraus ergibt sich bei ansonsten zeitlich stabilen Beschichtungsparametern ein an jeder Position quer zur Bahn zeitlich stabiles Alter der Masse. In erster Näherung nehmen das Alter der Masse und damit auch der Fortschritt der Viskositätsänderung quer zur Bahn linear zu, wobei jede Reaktionsphase ortsfest stabil ist. Der Reaktionsfortschritt wird durch das Verfahren quer zur Bahn räumlich aufgelöst.

Damit ist die Voraussetzung gegeben, um den Masseauftrag gezielt ausgleichend zu beeinflussen. So kann z.B. der Beschichtungs-Spalt einseitig so justiert werden, dass die mit dem Fortschritt der Viskositätsänderung einhergehende Änderung des Masseauftrages exakt ausgeglichen wird. Bei Bedarf ist es außerdem möglich, durch weitere Maßnahmen wie z.B. Achs-Crossing oder Roll-Bending die Geometrie des Spaltes gezielt zu beeinflussen. Da die Verhältnisse in der Masseflotte bei dem erfindungsgemäßen Verfahren an jeder Stelle quer zur Bahn zeitlich stabil sind, kann nun durch einmalige Spaltkorrekturen das gewünschte Querprofil dauerhaft exakt eingestellt werden.

Die Tendenz zu lokaler Topfzeitüberschreitung in der rotierenden Masseflotte wird signifikant verringert, da an keiner Stelle in der rotierenden Masseflotte Masse gespeichert wird. Insgesamt ergeben sich damit Querprofile des Auftragsgewichts, die den mit herkömmlicher Massezuführung erzielbaren Profilen hinsichtlich ihrer Homogenität überlegen und insgesamt besser beherrschbar und einstellbar sind.

Aus dem Gegenstand der Erfindung ergibt sich zwangsläufig, dass unter einer "Masse" eine grundsätzlich beschichtbare, also hinreichend fließfähige Masse verstanden wird. Insbesondere ist die Masse eine sich mit der Zeit, insbesondere während des Beschichtungsvorgangs, rheologisch verändernde Masse. Darunter wird eine Masse verstanden, deren rheologische, also Verformungs- und Fließeigenschaften, sich mit der Zeit, insbesondere während des Beschichtungsvorgangs, verändern. Insbesondere wird darunter eine Masse mit sich verändernder Viskosität verstanden. Ursache für diese Veränderung kann z.B. ein Reaktionsfortschritt, eine Temperaturänderung oder ein Lösemittelverlust sein.

Das erfindungsgemäße Verfahren eignet sich beispielsweise für Dispersionen, Lösungen und Schmelzen, insbesondere Polymerschmelzen. Das Verfahren hat sich als besonders vorteilhaft einsetzbar bei der Herstellung von Klebebändern erwiesen. Bevorzugt ist daher das erfindungsgemäße Verfahren ein Verfahren zur Herstellung eines Klebebandes und die Masse eine Haftklebemasse, insbesondere eine lösemittelfreie Haftklebemasse, ganz besonders bevorzugt eine als Hotmelt verarbeitbare Masse. Es kommen aber - wie vorstehend schon erwähnt - auch lösemittelhaltige Massen oder wässrige Dispersionen in Betracht.

Als bahnförmiges Trägermaterial kommen sämtliche bekannten und im erfindungsgemäßen Verfahren prinzipiell einsetzbaren Materialien in Frage, beispielsweise Folien wie Polyethylen-, Polypropylen-, Polyethylenterephthalat- und Polyvinylchlorid-Folien oder geschäumte Materialien wie Polyethylen- und Polyacrylatschäume. Als bahnförmiges Trägermaterial wird auch ein Releaseliner angesehen, der entweder temporär (beispielsweise produktionsbedingt) oder bis zur bestimmungsgemäßen Verwendung der Masse auf dieser verbleibt. So ist es erfindungsgemäß möglich, dass die Masse zu einem so genannten Transferklebeband (trägerloses Klebeband) ausgeformt und auf einen Releaseliner aufgebracht wird.

Die Ausgestaltung der Elemente A und B der Beschichtungsvorrichtung ist prinzipiell beliebig, solange diese beiden Elemente miteinander einen Spalt bilden, vor dem die zu beschichtende Masse aufgestaut werden kann. Bevorzugt ist das Element A der Beschichtungsanlage eine rotierende Walze. Besonders bevorzugt sind die Elemente A und B jeweils Walzen, wobei mindestens A eine rotierende Walze ist; oder A ist eine zu beschichtende Bahn und B ein Rakel; oder A ist eine rotierende Walze und B ein Rakel.

Dementsprechend ist die Beschichtungsvorrichtung bevorzugt ein Walzenkalander, ein Mehrwalzenauftragswerk, ein Rakel, ein Roll-over-Roll-Auftragswerk oder ein Glättwerk. Besonders bevorzugt ist die Beschichtungsvorrichtung ein Walzenkalander. Walzenkalander bieten den Vorteil, dass sie besonders gut für die Verarbeitung höherviskoser Massen, beispielsweise lösemittelfreier Haftklebemassen, geeignet sind.

Das erfindungsgemäße Verfahren sieht insbesondere den Transport der Masse durch den Spalt zwischen den Elementen A und B der Beschichtungsvorrichtung vor. Der Spalt ist bevorzugt formgebend eingestellt, d.h. die Masse wird beim Passieren das Spaltes direkt auf das bahnförmige Trägermaterial aufgebracht oder liegt zumindest nach dem Passieren des Spaltes in der zum Auftrag auf das Trägermaterial vorgesehenen Form vor, weist also insbesondere die erforderliche flächige Ausgestaltung auf. Der Abstand zwischen den beiden den Spalt bildenden Elementen A und B ist die Spaltbreite. Quer zur Bahn verläuft dementsprechend die Längserstreckung des Spaltes.

Der Spalt weist einen Einzugsbereich auf. Darunter wird der im Massestrom unmittelbar vor dem Spalt befindliche Bereich verstanden, innerhalb dessen die Masse unter den Einfluss der sich durch das Zusammenspiel der sich relativ zueinander bewegenden Elemente A und B und der Verengung zum Spalt hin ergebenden Kräfte gerät, die schließlich dazu führen, dass die Masse in den Spalt hinein und durch diesen hindurch transportiert wird.

Dem Einzugsbereich des Spaltes lässt sich ein von dem konkreten Aufbau der Beschichtungsvorrichtung und den konkreten Betriebsverhältnissen abhängender, von der Masseflotte ausfüllbarer Bereich zuordnen. Dieser Bereich wiederum weist zwei Ränder auf, die seine entlang der Längserstreckung des Spaltes verlaufende Längserstreckung E begrenzen, d.h. der Abstand dieser beiden Ränder voneinander ist mit der Längserstreckung E des von der Masseflotte ausfüllbaren Einzugsbereich des Spaltes gleichzusetzen und bildet erfindungsgemäß die Bezugsgröße für Dₘₐₓ (Dₘₐₓ = 10 % dieses Abstands). Durch jeden dieser Ränder verläuft eine orthogonal zur Längserstreckung des Spaltes angeordnete Ebene, welche die Bezugsebene für die Entfernung aller Austrittspunkte der Zuführvorrichtung und aller Punkte, an denen die zugeführte Masse in Kontakt mit der rotierenden Masseflotte gerät, bildet. Keiner dieser Punkte darf erfindungsgemäß um mehr als Dₘₐₓ von der ihm am nächsten liegenden dieser Ebenen entfernt sein. Dies bedeutet, dass der Zulauf der Masse in den Spalt und insbesondere in die rotierende Masseflotte im Wesentlichen "von der Seite her" erfolgt. Das erfindungsgemäße Verfahren grenzt sich damit von im Stand der Technik bekannten Verfahren ab, bei denen der Zulauf in die Mitte des Spaltes oder zumindest in der Spaltmitte benachbarte Bereiche oder über weite Bereiche des Spaltes verteilt erfolgt. Bevorzugt liegt jeder Austrittspunkt der Zuführvorrichtung und jeder Punkt, an dem die zugeführte Masse in Kontakt mit der rotierenden Masseflotte gerät, in der orthogonal zur Längserstreckung des Spaltes angeordneten Ebene, welche die Längserstreckung E des von der Masseflotte ausfüllbaren Einzugsbereichs des Spaltes begrenzt.

Prinzipiell ist es im Sinne des erfindungsgemäßen Verfahrens, wenn der Austritt der Zuführvorrichtung in Bahnrichtung bzw. in Maschinenrichtung in der Nähe, bevorzugt in unmittelbarer Nähe des Spaltes angeordnet ist. Ein Auftrag der Masse auf die Bahn weit vor dem Spalt wird regelmäßig dazu führen, dass die Masse sich schon vor Erreichen des Spalteinzugsbereichs quer über die Bahn verteilt und somit nicht mehr das Merkmal des erfindungsgemäßen Verfahrens erfüllt, wonach jeder Punkt, an dem die zugeführte Masse in Kontakt mit der rotierenden Masseflotte gerät, in der oder in einer maximalen Entfernung Dₘₐₓ von der orthogonal zur Längserstreckung des Spaltes angeordneten Ebene liegt, welche die Längserstreckung E des von der Masseflotte ausfüllbaren Einzugsbereichs des Spaltes begrenzt. Als Folge daraus wäre der mit der Erfindung erzielbare Vorteil, dass an jeder Position quer zur Bahn stabile Altersverhältnisse herrschen, nicht zu verwirklichen. Eine Ausführungsform, bei der trotz eines Austritts der Masse aus der Zuführvorrichtung in Bahnrichtung deutlich vor dem Spalt die Verteilung der Masse quer zur Bahn lediglich in den durch das erfindungsgemäße Verfahren gesetzten Grenzen verläuft, fällt selbstverständlich unter das erfindungsgemäße Verfahren.

Die Begrenzung der Längserstreckung E des von der Masseflotte ausfüllbaren Einzugsbereichs des Spaltes wird bevorzugt durch so genannte Seitenbegrenzer vorgenommen. Darunter werden Elemente der Beschichtungsvorrichtung verstanden, welche die entsprechenden Seitenbereiche des Spaltes gegen eine weitere Längsausdehnung der Masseflotte absperren. Sie müssen sich daher der Form des Spaltes weitgehend angepasst sein und möglichst eng an den spaltbildenden Elementen A und B anliegen.

Unter einer "Zuführvorrichtung" wird jede Vorrichtung verstanden, durch die ein gerichteter Transport der Masse zu einem Austrittspunkt hin erfolgt. Es kann sich dabei um ein Rohr, einen Schlauch oder andere zu im Wesentlichen einer Raumrichtung hin geöffnete und ansonsten räumlich umgrenzte Gebilde handeln. Am Auslass bzw. Austritt der Zuführvorrichtung wird die Masse derart freigesetzt, dass sie sich auf die Bahn bzw. in den Spalt bewegt. Unter einem "Austrittspunkt der Zuführvorrichtung" wird ein Punkt im dreidimensionalen Raum verstanden, der sich genau auf der Grenze zwischen dem zur Zuführvorrichtung gehörenden (von dieser größtenteils umschlossenen) Raum und dem freien Raum nach der Zuführvorrichtung (dem angrenzenden, von der Zuführvorrichtung nicht mehr umschlossenen Raum) befindet.

Erfindungsgemäß liegt jeder Austrittspunkt der Zuführvorrichtung unterhalb der Oberfläche der Masseflotte. Dies bedeutet, dass der Auslass der Zuführvorrichtung von der Masseflotte vollständig umgeben ist. Der auf diese Weise realisierte Massezulauf führt vorteilhaft dazu, dass die Zulaufstelle sich nicht im Beschichtungsprofil markiert.

Bevorzugt befindet sich an beiden Enden der Längserstreckung des Spaltes jeweils mindestens ein Austritt der Zuführvorrichtung, wobei jeder Austrittspunkt dieser Zuführvorrichtungen höchstens Dₘₐₓ von der orthogonal zur Längserstreckung des Spaltes angeordneten Ebene entfernt ist, welche die Längserstreckung E des von der Masseflotte ausfüllbaren Einzugsbereichs des Spaltes begrenzt, oder in dieser Ebene liegt und besonders bevorzugt in dieser Ebene liegt.

Bevorzugt ist beim erfindungsgemäßen Verfahren die Menge an eingebrachter Masse pro Zeiteinheit nicht größer als die durch die Beschichtung abgeführte Menge an Masse; d.h. der Massezulauf ist nicht größer als der Masseverbrauch durch die Beschichtung. Zwar ist dem Volumen der rotierenden Masseflotte grundsätzlich keine Grenze gesetzt; ein zunehmendes Flottenvolumen bewirkt aber größere radiale Spaltkräfte, welche die den Spalt bildenden Elemente des Auftragswerks in der Mitte auseinanderbiegen könnten und daher kompensiert werden müssten. Zudem ist in einer großen Masseflotte wesentlich mehr Masse in einem dynamischen Gleichgewicht gespeichert, d.h. die mittlere Verweilzeit ist größer als in kleinen Masseflotten, so dass die Gefahr einer Topfzeitüberschreitung größer ist.

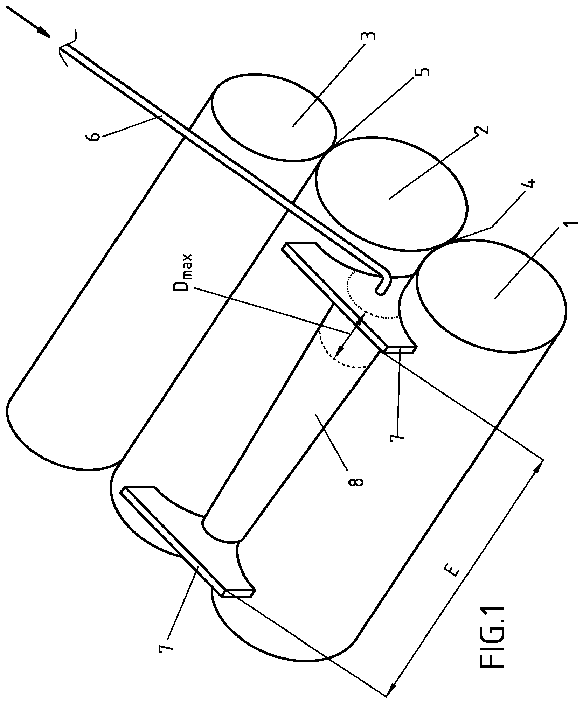

Figur 1 stellt beispielhaft eine im erfindungsgemäßen Verfahren einsetzbare Beschichtungsvorrichtung dar. Bei der Vorrichtung handelt es sich um ein 3-WalzenKalander-Auftragswerk. Das Auftragswerk umfasst die Walzen 1 (entspricht dem spaltbildenden Element B), 2 (entspricht dem spaltbildenden Element A) und 3. Die zu beschichtende Masse wird über die Zuführvorrichtung 6 an den Spalt 4 zwischen den Walzen 1 und 2 geführt. Vor dem Walzenspalt wird sie aufgestaut, und es kommt zur durch die Rotation der Walze 2 relativ zur Walze 1 zur Ausbildung einer rotierenden Masseflotte 8, aus der die Masse sukzessive in bzw. durch den Spalt befördert wird. Der von der Masseflotte ausfüllbare Einzugsbereich des Spaltes 4 wird von den beiden Seitenbegrenzern 7 begrenzt. Die jeweilige Innenfläche der Seitenbegrenzer 7 liegt also in der orthogonal zur Längserstreckung des Spaltes 4 angeordneten Ebene, welche die Längserstreckung E des von der Masseflotte ausfüllbaren Einzugsbereichs des Spaltes 4 begrenzt. Die Masse kann von der Walze 2 übernommen und im Walzenspalt 5 auf ein auf der Oberfläche der Walze 3 aufliegendes Trägermaterial aufgebracht werden.

### Beispiel

Als aufzubringende Masse wurde eine reaktive Polyacrylat-Schmelze eingesetzt, die wie folgt zusammengesetzt war:

| | |
|---|---|
| Acrylat-Copolymer (EHA/BA/AS 47,5/47,5/5 m%) | 70 m% |
| Klebharz (Dertophene® T110; Fa. DRT) | 30 m% |
| Vernetzerharz (Polypox® R20; Fa. UPPC AG) | 0,6 m% |
| Aktivator (Epikure® 3223, Fa. HEXION) | 0,3 m% |

Als bahnförmiges Beschichtungsmaterial wurde ein handelsüblicher Glassine-Liner eingesetzt.

Die Beschichtung erfolgte an einem 3-Walzen-L-Kalander-Auftragswerk, das folgende Einstellungen aufwies (Bezugsziffern entsprechend Figur 1):

| Beschichtungsbreite: | 500 mm, seitlich begrenzt durch auf den Walzenoberflächen von Walzenspalt 1 laufende, passgenaue Teflon-Spachtel |
|---|---|
| Massedurchsatz: | 51 kg/h |
| Dichte der Masse: | 1,04 g/cm³ |
| Bahngeschwindigkeit (Walze 3): | 17 m/min |
| Masseauftrag: | 100 g/m² |
| Oberflächengeschwindigkeit Walze 1 | 0 m/min |
| Oberflächengeschwindigkeit Walze 2 | 3 m/min |
| Oberflächengeschwindigkeit Walze 3 | 17 m/min |

Die Oberflächentemperaturen der Kalanderwalzen wurden so temperiert, dass in den beiden Kalanderspalten 4 und 5 ein vollständiger Masseübertrag auf die nachfolgende Walze ermöglicht wurde. Dafür lagen die notwendigen Temperaturen je nach Masserheologie und Relativgeschwindigkeit der Walzen bei ca. 40 - 160°C.
Das Rohr der Massezuleitung hatte einen Innendurchmesser von 16 mm und durchdrang einen der beiden Seitenspachtel an einer Stelle, die so tief im Einzugsbereich des Spaltes 4 lag, dass sie unterhalb der Oberfläche der sich im Betrieb ausbildenden Masseflotte lag.

Die in den Walzenspalt gepumpte Masse rotierte zur schnelleren Walze 2 hin. Dabei verteilte sich die Masse selbsttätig zum anderen Seitenspachtel hin und bildete eine kegelförmige Flotte, deren dickeres Ende sich am Zulaufpunkt befand. Die Flotte konnte vergrößert werden, indem der Massezulauf größer als der Verbrauch durch die Beschichtung eingestellt wurde und umgekehrt. Die Flotte konnte minimal so klein eingestellt werden, dass sie den der Zulaufstelle gegenüberliegenden Seitenspachtel nicht berührte und stattdessen in einer feinen Spitze auslief. Diese Stelle markierte dann den seitlichen Rand der Beschichtung auf der laufenden Bahn.
Das Volumen der Masseflotte wurde außerdem durch die Relativgeschwindigkeit der beiden Walzen bestimmt: je größer diese war, desto flacher war der Kegelwinkel der Flotte und desto kleiner wurde damit sein Volumen.
Der Spalt zwischen Walze 1 und 2 wurde an den Walzenlagern so eingestellt, dass der an der Zulaufseite ursprünglich höhere Masseauftrag genau ausgeglichen wurde.

Zur Überprüfung der Beschichtungsqualität wurde das beschichtete Flächengewicht der aufgetragenen Zusammensetzung kontinuierlich durch einen über die gesamte Bahnbreite traversierenden ß-Strahler gemessen. Dabei wurde folgendes ermittelt:

| | |
|---|---|
| Soll-Masseauftrag | 100 g/m² |

Bestimmung der Standard-Abweichung s durch Mittelung aus 3 aufeinanderfolgenden Querprofilen, jeweils 20 Messpunkte quer zu Bahn:

| | |
|---|---|
| Herkömmliche Beschichtung, Variante X | s = 2,3 g/m² |
| Herkömmliche Beschichtung, Variante Y | s = 2,0 g/m² |
| Erfindungsgemäße Beschichtung: | s = 1,1 g/m². |

Die herkömmliche Massezufuhr in den Kalander an Spalt 4 erfolgte nach Variante X durch Vorverteilung der Masse mittels einer in der Folienextrusion üblichen Breitschlitzdüse. Diese erzeugte einen frei hängenden Massevorhang, der den Spalt 4 weitgehend füllte. In diesem Fall entstand in Spalt 4 eine zur Walze 2 hin rotierende zylindrische Masseflotte, so dass der Massevorhang zur Walze 2 hin gezogen und zwischen Masseflotte und Walze 2 eingezogen wurde.

Die herkömmliche Massezufuhr in den Kalander an Spalt 4 erfolgte nach Variante Y durch ein mittig über dem Spalt 4 angebrachtes Rohr in Form eines Schmelzestranges. Wie in Variante X entstand in Spalt 4 eine zur Walze 2 hin rotierende Masseflotte mit rautenförmigem Längsschnitt, so dass der Massestrang zur Walze 2 hin gezogen wurde und an der dicksten Stelle der Masseflotte zwischen dieser und Walze 2 eingezogen wurde.

Das Beispiel zeigt, dass die Homogenität des Auftragsgewichts über die zu beschichtende Bahn hinweg mit dem erfindungsgemäßen Verfahren verbessert wird. Es wurde ein besonders gleichmäßiger Masseauftrag erzielt, der sich beispielsweise in den folgenden Vorteilen niederschlägt:
1. Beim Wickeln der beschichteten Bahn zu Ballen entstehen keine Kolbenringe, deren Ursache ortsfeste Dickstellen in der Masseverteilung sind. Kolbenringe im Ballen führen zu einer lokalen Dehnung des Trägermaterials, die beim Abrollen zu einer schlechten Planlage der Bahn führen. Das wiederum führt zu Problemen bei der Weiterverarbeitung, z.B. durch Faltenbildung.
2. Außerdem wird bei der Aufwicklung von Bahnen mit schlechter und ortsfester Masseverteilung an dünnen Stellen zwischen den Lagen besonders viel Schleppluft eingeschlossen, die ihrerseits optische Defekte verursachen kann. Erfindungsgemäß hergestellte Ballen weisen eine nahezu zylindrische Form auf und können deshalb ohne Lufteinschlüsse gewickelt werden; die abgerollte Bahn ist eben und hat eine besonders gute Planlage.
3. Kolbenringe können außerdem dazu führen, dass der Ballen der dort sehr hohen Wickelspannung ausweicht und teleskopiert, wodurch er für folgende Verarbeitungsschritte unbrauchbar wird. Das erfindungsgemäße Verfahren ermöglicht die Wicklung formstabiler Ballen.
4. Auch in der Anwendung beschichteter Bahnen, z.B. in einer bevorzugten Verwendung als doppelseitiges Klebeband, ist die Dicke eine wichtige Produkteigenschaft. Sie wird z.B. genutzt, um Bauteile in exakt definierten Fugen passend zu verkleben. Eine erfindungsgemäß verbesserte Masseverteilung ermöglicht hier engere Spezifikationsgrenzen und damit höhere Produktqualität.
5. Das Flächengewicht des Beschichtungsstoffes ist normalerweise mitbestimmend für die erwünschten Eigenschaften der Beschichtung. Eine besonders gleichförmige Beschichtung ist damit Voraussetzung für konstante Produktqualität. Bei Haftklebebändern bestimmt der Masseauftrag direkt die klebtechnischen Eigenschaften, z.B. die Klebkraft. Das erfindungsgemäße Verfahren ermöglicht Produkte mit besonders konstanten klebtechnischen Eigenschaften.

## Patentansprüche

1. Verfahren zum Beschichten einer Masse mit einer komplexen Viskosität (Platte-Platte-Rheometer; 25 °C) von 0,1 Pas (100 rad) bis 10⁶ Pas (0,1 rad) auf ein bahnförmiges Trägermaterial mittels einer Beschichtungsvorrichtung, umfassend mindestens ein Element A, das mit einem weiteren Element B einen Spalt bildet, vor dem die Masse aufgestaut wird, und das sich relativ zu dem Element B derart bewegt, dass sich eine rotierende Masseflotte ausbildet und die Masse in den Spalt befördert wird,
umfassend
- das Einbringen der Masse über eine Zuführvorrichtung in den Einzugsbereich des Spaltes, **dadurch gekennzeichnet, dass**
jeder Austrittspunkt der Zuführvorrichtung und jeder Punkt, an dem die zugeführte Masse in Kontakt mit der rotierenden Masseflotte gerät, in der oder in einer Entfernung D von der orthogonal zur Längserstreckung des Spaltes angeordneten Ebene liegt, welche die Längserstreckung E des von der Masseflotte ausfüllbaren Einzugsbereichs des Spaltes begrenzt, und dass jeder Austrittspunkt der Zuführvorrichtung unterhalb der Oberfläche der Masseflotte liegt,
wobei D einen Maximalwert Dₘₐₓ aufweist, der 10 % der Längserstreckung E des von der Masseflotte ausfüllbaren Einzugsbereichs des Spaltes beträgt; und
- das Aufbringen der Masse auf ein bahnförmiges Trägermaterial im Spalt oder nachdem die Masse den Spalt durchlaufen hat.

2. Verfahren gemäß Anspruch 1, **dadurch gekennzeichnet, dass** sich an beiden Enden der Längserstreckung des Spaltes jeweils mindestens ein Austritt der Zuführvorrichtung befindet, wobei jeder Austrittspunkt dieser Zuführvorrichtungen höchstens Dₘₐₓ von der orthogonal zur Längserstreckung des Spaltes angeordneten Ebene entfernt ist, welche die Längserstreckung E des von der Masseflotte ausfüllbaren Einzugsbereichs des Spaltes begrenzt.

3. Verfahren gemäß mindestens einem der vorstehenden Ansprüche, **dadurch gekennzeichnet, dass** pro Zeiteinheit die Menge an eingebrachter Masse nicht größer ist als die durch die Beschichtung abgeführte Menge an Masse.

4. Verfahren gemäß mindestens einem der vorstehenden Ansprüche, **dadurch gekennzeichnet, dass** das Element A der Beschichtungsvorrichtung eine rotierende Walze ist.

5. Verfahren gemäß mindestens einem der vorstehenden Ansprüche, **dadurch gekennzeichnet, dass** die Beschichtungsvorrichtung ein Walzenkalander, ein Mehrwalzenauftragswerk, ein Roll-over-Roll-Auftragswerk oder ein Glättwerk ist, oder dass die Beschichtungsvorrichtung ein Rakel umfasst.

6. Verfahren gemäß mindestens einem der vorstehenden Ansprüche, **dadurch gekennzeichnet, dass** die Beschichtungsvorrichtung an ein Walzenkalander ist.

7. Verfahren gemäß mindestens einem der vorstehenden Ansprüche, **dadurch gekennzeichnet, dass** das Verfahren ein Verfahren zur Herstellung eines Klebebandes und die Masse eine Haftklebemasse ist.

## Claims

1. Method for coating a composition having a complex viscosity (plate/plate rheometer; 25°C) of 0.1 Pas (100 rad) to 10⁶ Pas (0.1 rad) onto a carrier material in web form by means of a coating apparatus comprising at least one element A, that forms with a further element B a nip ahead of which the composition is held up, and that moves relative to the element B in such a way that a rotating body of composition is developed and the composition is conveyed into the nip,
comprising
- the introduction of the composition via a supply means into the intake region of the nip, **characterized in that**
every exit point of the supply means and every point at which the supplied composition comes into contact with the rotating body of composition is situated at the distance or at a distance D from the plane that is orthogonal to the longitudinal extent of the nip and that limits the longitudinal extent E of the nip intake region fully fillable by the body of composition, and **in that** every exit point of the supply means is situated below the surface of the body of composition,
where D has a maximum value Dₘₐₓ which is 10% of the longitudinal extent E of the nip intake region fully fillable by the body of composition; and
- the application of the composition to a carrier material in web form in the nip or after the composition has travelled through the nip.

2. Method according to Claim 1, **characterized in that** at both ends of the longitudinal extent of the nip there is in each case at least one exit of the supply means, where every exit point of these supply means is at a distance of no more than Dₘₐₓ from the plane that is orthogonal to the longitudinal extent of the nip and that limits the longitudinal extent E of the nip intake region fully fillable by the body of composition.

3. Method according to at least one of the preceding claims, **characterized in that** the amount of composition introduced per unit time is not greater than the amount of composition taken off by the coating.

4. Method according to at least one of the preceding claims, **characterized in that** the element A of the coating apparatus is a rotating roll.

5. Method according to at least one of the preceding claims, **characterized in that** the coating apparatus is a roll calender, a multi-roll applicator, a roll-over-roll applicator or a polishing stack or **in that** the coating apparatus comprises a doctor blade.

6. Method according to at least one of the preceding claims, **characterized in that** the coating apparatus is a roll calender.

7. Method according to at least one of the preceding claims, **characterized in that** the method is a method for producing an adhesive tape and the composition is a pressure-sensitive adhesive.

## Revendications

1. Procédé de revêtement d'une masse ayant une viscosité complexe (rhéomètre plan-plan ; 25 °C) de 0,1 Pas (100 rad) à 10⁶ Pas (0,1 rad) sur un matériau support en forme de bande au moyen d'un dispositif de revêtement, comprenant au moins un élément A qui forme avec un autre élément B une fente, avant laquelle la masse est retenue, et qui se déplace par rapport à l'élément B de sorte qu'un bain de masse rotatif se forme et que la masse soit transportée dans la fente, comprenant
- l'introduction de la masse par un dispositif d'alimentation dans la zone d'entrée de la fente, **caractérisée en ce que**
chaque point de sortie du dispositif d'alimentation et chaque point auquel la masse introduite est en contact avec le bain de masse rotatif se situent dans le ou à une distance D du plan agencé perpendiculairement à l'étendue longitudinale de la fente qui délimite l'étendue longitudinale E de la zone d'entrée de la fente pouvant être remplie par le bain de masse, et **en ce que** chaque point de sortie du dispositif d'alimentation se situe sous la surface du bain de masse,
D présentant une valeur maximale Dₘₐₓ, qui est de 10 % de l'étendue longitudinale E de la zone d'entrée de la fente pouvant être remplie par le bain de masse ; et
- l'application de la masse sur un matériau support en forme de bande dans la fente ou après que la masse ait traversé la fente.

2. Procédé selon la revendication 1, **caractérisé en ce qu'**au moins une sortie du dispositif d'alimentation se trouve à chacune des deux extrémités de l'étendue longitudinale de la fente, chaque point de sortie de ces dispositifs d'alimentation étant à une distance d'au plus Dₘₐₓ du plan agencé perpendiculairement à l'étendue longitudinale de la fente qui délimite l'étendue longitudinale E de la zone d'entrée de la fente pouvant être remplie par le bain de masse.

3. Procédé selon au moins l'une quelconque des revendications précédentes, **caractérisé en ce que** la quantité de masse introduite par unité de temps n'est pas supérieure à la quantité de masse déchargée par le revêtement.

4. Procédé selon au moins l'une quelconque des revendications précédentes, **caractérisé en ce que** l'élément A du dispositif de revêtement est un cylindre rotatif.

5. Procédé selon au moins l'une quelconque des revendications précédentes, **caractérisé en ce que** le dispositif de revêtement est une calandre à cylindre, un outil d'application à plusieurs cylindres, un outil d'application « roll over roll » ou un lissoir, ou **en ce que** le dispositif de revêtement comprend une racle.

6. Procédé selon au moins l'une quelconque des revendications précédentes, **caractérisé en ce que** le dispositif de revêtement est une calandre à cylindre.

7. Procédé selon au moins l'une quelconque des revendications précédentes, **caractérisé en ce que** le procédé est un procédé de fabrication d'une bande adhésive et la masse est une masse adhésive de contact.
